# EUROPEAN PATENT SPECIFICATION

(11) **EP 2 404 850 B1**
(45) Date of publication and mention of the grant of the patent: **16.01.2013**
(21) Application number: 10425228.3
(22) Date of filing: 05.07.2010
(51) Int. Cl.: B65G 47/14

(54) **Object orienting device**
Objektausrichtungsvorrichtung
Dispositif d'orientation d'objets

(43) Date of publication of application: 11.01.2012
(73) Proprietor: Bonino S.p.A., 15100 Alessandria (IT)
(72) Inventor: Gasparini, Enrico Maria, 15047 Spinetta Marengo Alessandria (IT)
(74) Representative: Leihkauf, Steffen Falk

(56) References cited:
- EP-A1- 1 127 834
- EP-A1- 1 557 380
- US-A- 2 924 355
- US-A- 3 330 403
- US-A- 5 236 077

## Description

The present invention relates in general to object orienting systems, and in particular to an orienting machine for arranging a plurality of objects having the same shape in a succession and with a predetermined orientation.

Such orienting systems are usually used in production, processing, assembly, packaging or similar lines for industrial or consumable products in order to allow the feeding of components, parts, products (hereinafter referred to as "objects") with the orientation required by the subsequent treatment or processing step.

In order to meet the requirements of an automated industrial production, object orienting systems must on the one side ensure a high object orienting speed and on the other side must be capable of also orienting objects of a highly irregular shape, for example plugs or spout-plug units having symmetrically or asymmetrically protruding portions.

Orienting machines are known, comprising a succession of orienting seats movable along a handling path, wherein each orienting seat is suitable for respectively receiving one of such objects both in a desired vertical orientation and in a vertical orientation other than that desired, a feeder that conveys said objects in said orienting seats in an initial point of the handling path, a compressed air ejection blower that addresses a compressed air jet towards the objects seated in the orienting seats so as to eject the objects with a vertical orientation other than that desired from the orienting seat, as well als transport means that pick up the objects with desired vertical orientation from the orienting seats, downstream of the handling path.

Such known vertical orienting machines, usually made with rotary machines with a circular crown that forms such orienting seats (sometimes called sectors) reach high orienting speeds (about 300 objects a minute) but they are characterised by the drawback that properly oriented objects, but with a highly irregular shape on objects the orientation whereof implied a not very steady support (for example with a very high barycentre) come out of the orienting seats too easily, thus reducing the actual orienting speed. EP1127834A1 describes an orienting machine according to the preamble of claim 1. In this machine, an air jet prevent two objects from being stacked onto one another.

The purpose of the present invention therefore is to provide an object orienting device which is simplier and cheaper to manufacture.

This purpose is achieved by an orienting device according to claim 1.

According to the invention, the orienting device comprises:

- a support structure,

- a succession of orienting seats suitable for respectively seating a single object in a single orienting seat,

- a support ring extending along an outer periphery of a rotating plate, connected to the support structure and carrying the succession of orienting seats, said seat support defining a handling path of such objects,

- means for moving such succession of orienting seats in a movement direction along the handling path,

- orienting means configured so as to eject the objects having an orientation other than the orientation desired from the orienting seats,

- an escape-preventing surface extended along a portion of the handling path and arranged above the orienting seats at such a height as to prevent a complete escape upwards of the objects having said desired orientation from the orienting seats, a shimming surface.

Thanks to the escape-preventing surface, objects already properly oriented cannot accidentally escape from the orienting seats anymore, for example in the pneumatic ejection zone (of the badly oriented objects) or due to vibrations or shocks undergone by other loose objects inside the device. As a consequence, an increase in the orienting speed is obtained, intended as number of objects oriented per minute.

Advantageous embodiments are the object of the dependent claims.

To better understand the invention and appreciate its advantages, some exemplary non-limiting embodiments thereof shall now be described with reference to the annexed figures, wherein:

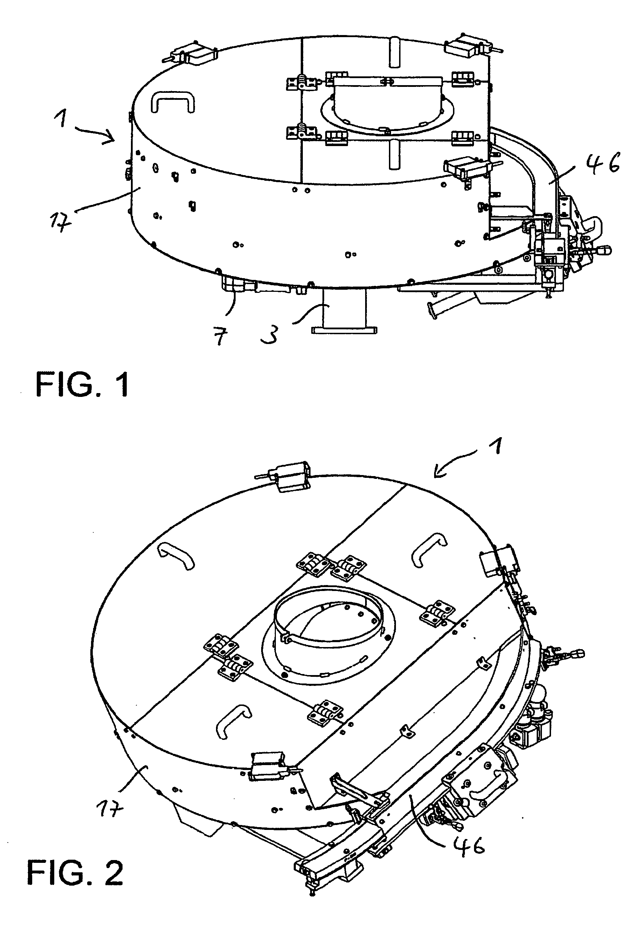

figure 1 shows a perspective side view of an orienting device according to the invention,

figure 2 shows a perspective top view of the orienting device of figure 1,

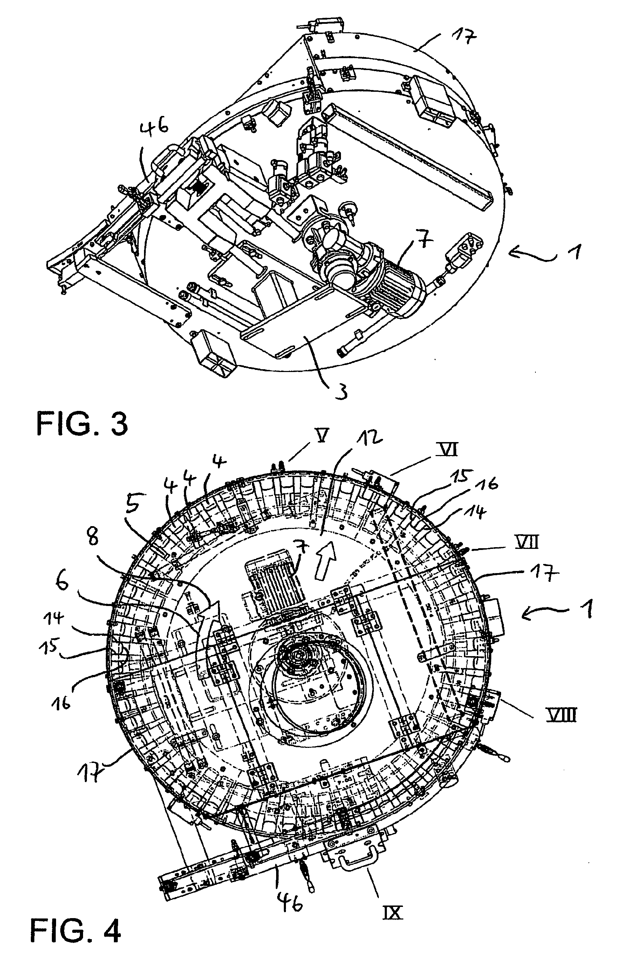

figure 3 shows a perspective bottom view of the orienting device of figure 1,

figure 4 shows a top view of the orienting device of figure 1, without cover,

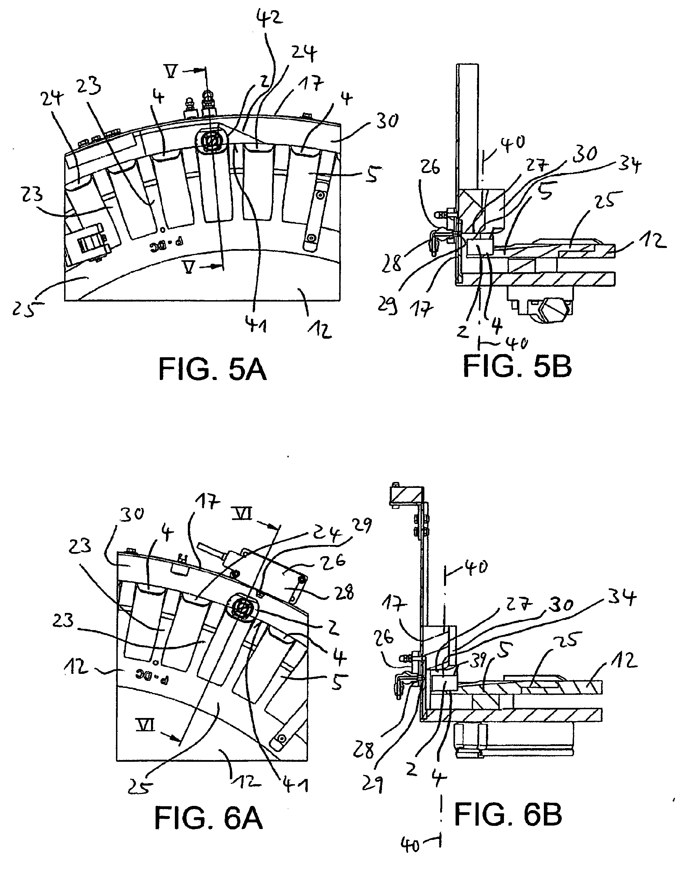

figure 5A shows an enlarged view of detail V of figure 4,

figure 5B shows a partly enlarged cutaway view along line V-V of figure 4,

figure 6A shows an enlarged view of detail VI of figure 4,

figure 6B shows a partly enlarged cutaway view along line VI-VI of figure 4,

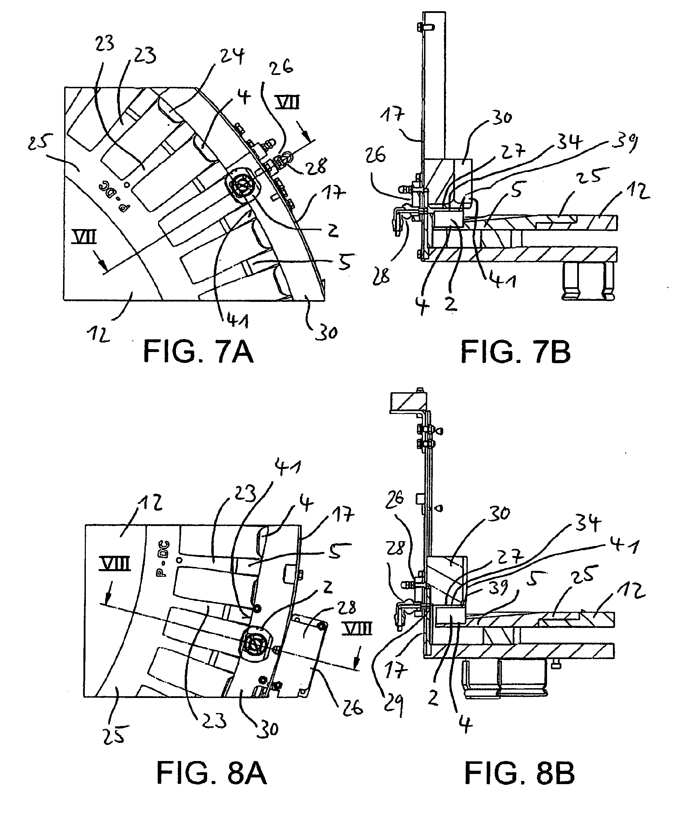

figure 7A shows an enlarged view of detail VII of figure 4,

figure 7B shows a partly enlarged cutaway view along line VII-VII of figure 4,

figure 8A shows an enlarged view of detail VIII of figure 4,

figure 8B shows a partly enlarged cutaway view along line VIII-VIII of figure 4,

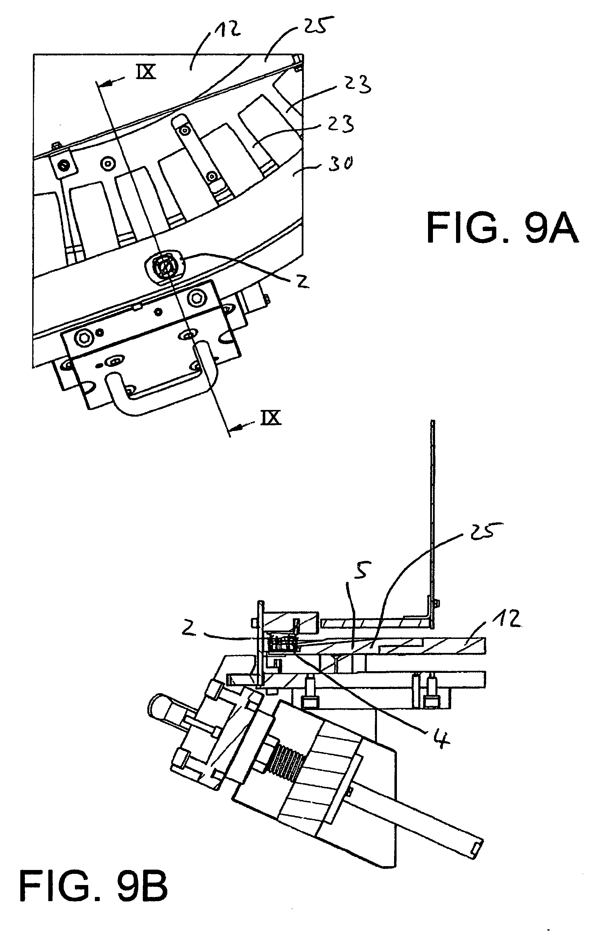

figure 9A shows an enlarged view of detail IX of figure 4,

figure 9B shows a partly enlarged cutaway view along line IX-IX of figure 4,

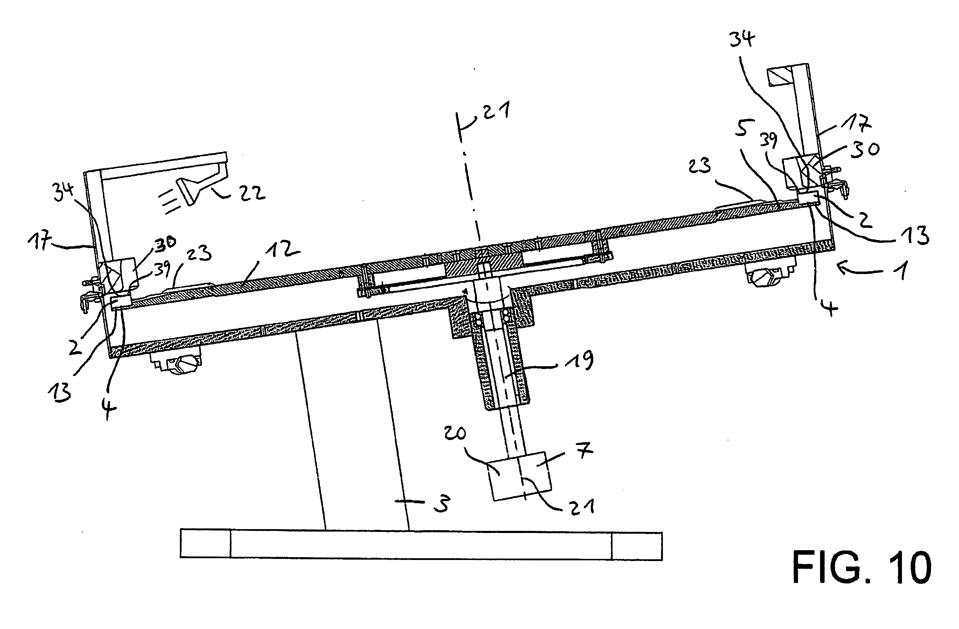

figure 10 shows a radial section view according to line X-X in figure 4,

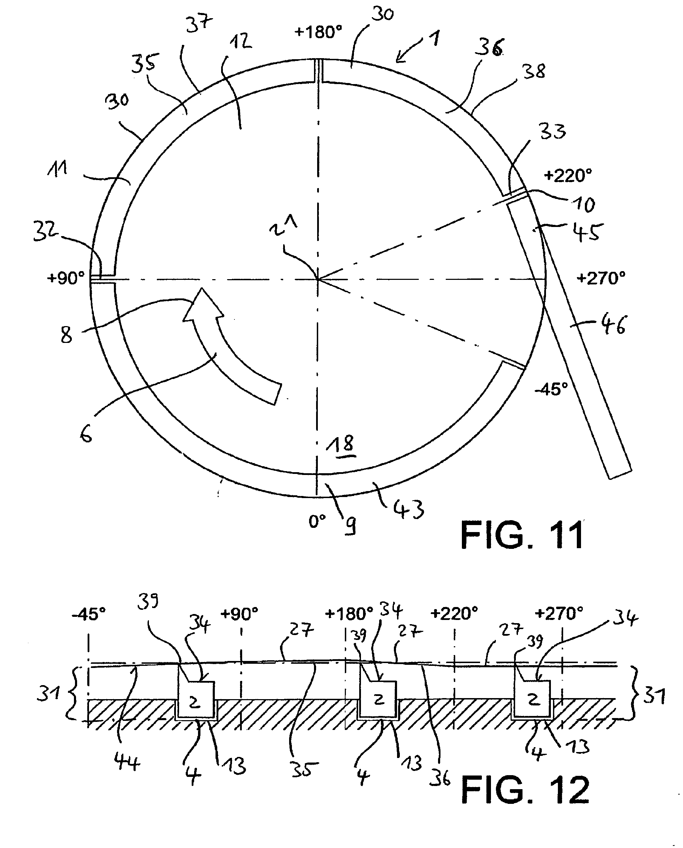

figure 11 shows a schematised view of the orienting device according to an embodiment of the invention,

figure 12 shows the profile of an escape-preventing surface along a handling path of the objects to be oriented, according to an embodiment of the invention,

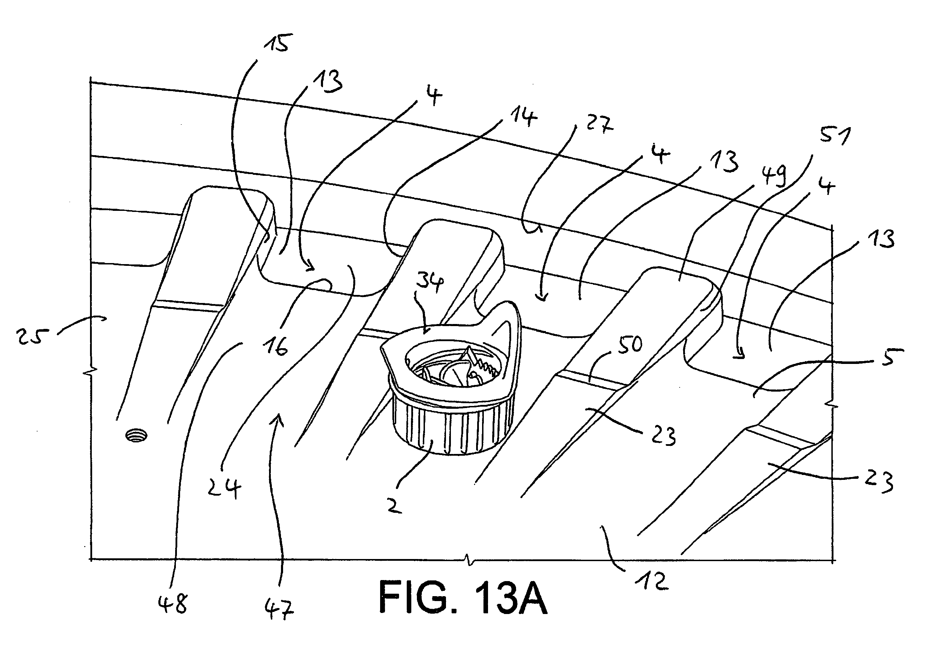

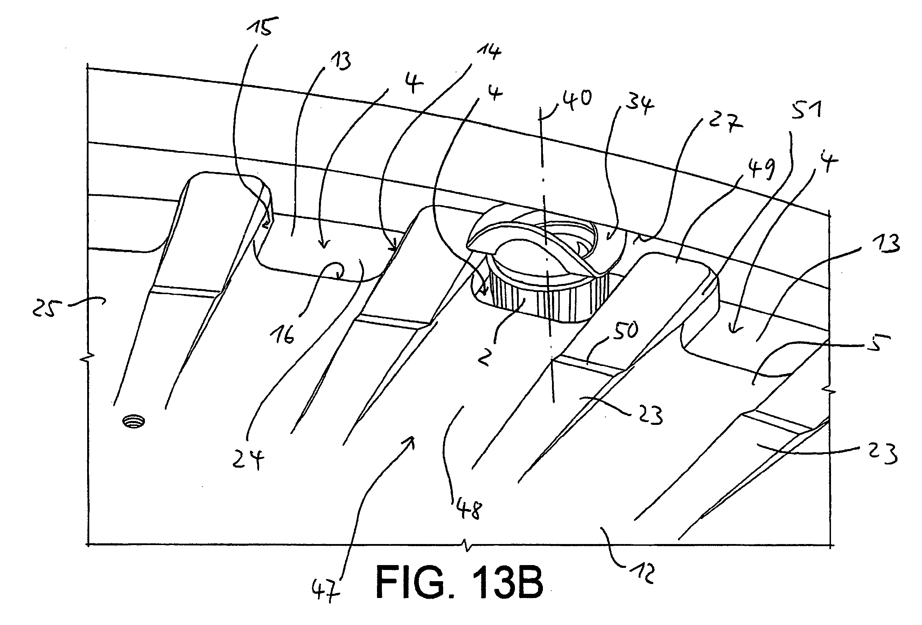

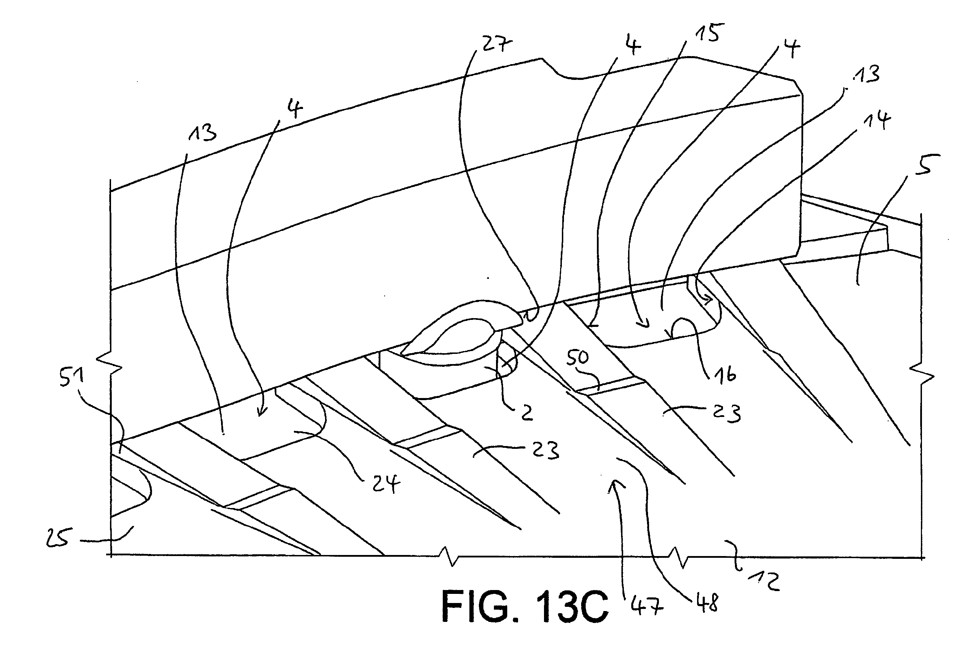

figures 13A, 13B and 13C show a conveying sequence of an object in an orienting seat of the device according to according to an embodiment of the invention.

With reference to the figures, an orienting device 1 for orienting objects 2 comprises a support structure 3, a succession of orienting seats 4 wherein every single orienting seat 4 is suitable for receiving a single object 2, a seat support 5 connected to the support structure 3 and carrying the succession of orienting seats 4 wherein such seat support 5 defines a handling path 6 of objects 2, as well as means 7 for moving the succession of orienting seats 4 in a movement direction 8 along the handling path 6. The handling path 6 is delimited upstream by a feeding point or portion 9 of objects 2, downstream by a removal point 10 of objects 2, and comprises an orienting portion 11, arranged downstream of the feeding point 9 with reference to the movement direction 8.

The orienting device 1 further comprises orienting means 26, arranged along the orienting portion 11 and configured so as to eject the objects having an orientation other than the orientation desired from the orienting seats 4, as well as an escape-preventing surface 27 extended along a portion of the handling path 6 and arranged above the orienting seats 4 at such height as to prevent a complete escape upwards of objects 2 having said desired orientation from the orienting seats 4.

According to the invention, the seat support 5 is configured as a support ring 5 extended along an outer circumference of a rotating plate 12 and preferably connected to the latter.

The single orienting seats 8 are delimited by a seat bottom 13 whereon object 2 rests due to the gravitational force, as well as side surfaces 14, 15, 16, in particular a front surface 14 delimiting the orienting seat 4 in the movement direction 8, a back seat 15 opposite the front surface 14 and a first side surface 16 delimiting the orienting seat 4 in the radially inner direction with reference to the axis of rotation 21 of the rotating plate 12.

In order to delimit the orienting seats 8 on the radially outer side thereof as well, a side wall 17 may be provided, extended circumferentially substantially along the entire handling path 6 and connected in a stationary manner to the support structure 3. A radially inner surface and facing the orienting seats 4 of the side wall 17 is suitable for delimiting the orienting seats 4 in the direction opposite the first side surface 16, that is, on a radially outer side thereof.

The feeding of objects 2 in the handling path 6 preferably takes place through the rotating plate 12 arranged radially inside the side wall 17 and configured so as to form, along with such side wall 17, a collecting space 40 for collecting loose objects 2 to be oriented. The rotating plate 12 is preferably inclined and connected to a shaft 19 of a motor 20 fixed to the support structure 3. Motor 20 is suitable for turning the rotating plate 12 along with the succession of orienting seats 2 so as to feed objects 2 into the orienting seats 4 and moving the orienting seats 4 along the handling path 6.

Thanks to the inclination of the rotating plate 12, loose objects 2 tend to build up in a lowest point thereof that forms the feeding point or portion 9 of the handling path 6 where the single objects 2 fall into seats 4.

Moreover, a pneumatic blower 22 may be provided (also called pneumatic comb 22) connected to the support structure 3, and configured for pushing objects 2 into seats 4, as well as a plurality of guiding walls 23, connected with the seat support 5 or with the rotating plate 12 and arranged, above the access openings 24 of seats 4, and suitable for guiding objects 2, during the conveying thereof, into seats 4.

Advantageously, the guiding walls 23, along with the bottom 13, front 14, back 15 and inside 16 surface of the same seats 4 are integrally made (in a single piece) for forming guiding and seating sectors 25 that facilitate and speed up replacement and assembly.

As is generally known, the orientation of objects 2 is carried out along the orienting portion 11 of the handling path 6, which extends between the feeding point 9 and the object removal point 10.

The orienting means 26 preferably comprise one or more compressed air ejection blowers 28, connected in a stationary manner to the support structure 3 (preferably to the circumferential side wall 17) or to the seat support 5, and configured so as to eject objects 2 with an orientation other than the orientation desired from seats 4.

To this end, the walls of seats 4 and/or the circumferential side wall 17 may have access window 29 suitable for allowing access of the compressed air jet to objects 2 and have such shape that the compressed air jet mainly ejects only objects 2 with an orientation other than that desired.

According to an embodiment of the invention, the orienting device 1 comprises an escape-preventing wall 30 connected to the circumferential side wall 17 and which on a bottom side facing the access opening 24 of the orienting seats 4, forms the above escape-preventing surface 27.

The escape-preventing wall 30 witch the escape-presenting surface 27 extends between the end of the feeding portion 9 and the object removal point 10 of the handling path 6, preferably from the end of the feeding portion 9 up to the object removal point 10 of the handling path 6.

According to an embodiment, the feeding portion 9 extends in a range between about -45° and about + 90 ° and the object removal point 10 may be made at about + 220° as seen in the movement direction 8 relative to the lowest point (0°) of the object collection space 18. As a consequence, the escape-preventing surface 27 preferably extends in a range from about + 90 ° to about + 220 ° of the handling path 6.

Advantageously, height 31 of the escape-preventing surface 27, or the vertical distance thereof from bottom 13 of the orienting seats 4 decreases in the movement direction 8, gradually or at discrete steps, from an initial end thereof 32 to a final end 33, so that the escape-preventing surface 27 gradually or at discrete steps approaches a surface 34 of object 2 facing upwards (when the object is properly oriented), as seat 4 with the same object 2 approaches the object removal point 10. In this way, the constraint of object 2 properly oriented into seat 4 increases with the separation of seat 4 from the object collection space 18, thus preventing undesired sticking and wedging of loose objects partly seated into seats 4 in the most crowded zones and the undesired escape of properly oriented objects in the portions of the handling path 6 free from sticking and wedging hazards.

According to an embodiment, the escape-preventing surface 27 comprises a first portion 35 extending from the initial end 32 in the movement direction 8 and having a height 31 (distance from the bottom of the orienting seats 4) substantially constant and a second portion 36 extending between the first portion 35 and the object removing point 10, preferably from the first portion 35 to the object removal point 10 and having a height 31 (distance from the bottom of the orientation seats 4) gradually decreasing in the movement direction 8.

Preferably, the first portion 35 is longer than the second portion 36, for example the first portion 35 may extend from about +90° up to about +180° and the second portion 36 may extend from about +180° to about +220° relative to the lowest point (0°) of the object collection space 18.

according to an embodiment, the escape-preventing wall 27 comprises a plurality of different portions, separately manufactured and individually connectable to the support structure 3, for example a first portion 37 that forms the first portion 35 of the escape-preventing surface 27 and a second portion 38 that forms the second portion 36 of the escape-preventing surface 27.

This facilitates the component transport and assembly and allows the use for example of a same portion of wall with escape-preventing surface at a constant height along with different wall portions with escape-preventing surface at a variable height for orienting different objects.

According to an embodiment, an auxiliary orienting surface 41 may be provided, preferably formed in the escape-preventing wall 30 and extended along at least one portion of the handling path.

The auxiliary orienting surface 41 is transverse or inclined relative to the escape-preventing surface 27 and configured for contacting a projection 39 of object 2 (preferably a portion 39 projecting upwards when object 2 in seat 4 is properly oriented) and turning or tilting the object in a desired manner during the advance of seat 4 with object 2 in the moving direction 8.

Such further rotation or inclination of object 2 preferably takes place around a further orientation axis 40, for example a vertical axis considering the "up-down" orientation through the ejection with a first orientation about a horizontal axis.

In an initial point 42 of the auxiliary orienting surface 41 there may be formed a seating track suitable for engaging such projections 39 irrespective of their instant position and guiding them towards the desired position thereof.

Upstream of the escape-preventing wall 30 there is provided a shimming wall 43 defining a shimming surface 44 arranged above the access opening 24 of the orienting seats 4 and extended along an initial portion of the handling path 6, that is between the start and the end of the feeding portion 9, for example from about -45° to about +90° relative to the lowest or initial point 0°.

The shimming surface 44 is configured for preventing the stacking of multiple objects 2 on a single orienting seat 4.

In order to prevent stacking and wedging of objects in the feeding zone, height 31 of the shimming surface 42 (that is, the distance thereof from bottom 13 of the orienting seats 4 gradually increases in the movement direction 8.

Advantageously, in the connection or transition point between the shimming surface 44 and the escape-preventing surface 27 they have the same height 31 for favouring a passage with geometrical continuity.

According to an embodiment, the shimming wall 43 may be formed integrally with at least one portion of the escape-preventing wall 50 and the initial point 42 with seating track of the auxiliary orienting surface 41 may also be formed in the shimming wall 43.

According to an embodiment, the auxiliary orienting surface is formed in a groove extended along a portion of the handling path 6.

According to an embodiment, the orienting device 1 comprises extraction, means 45, suitable for engaging the oriented objects 2 and removing them from device 1 in the removal point 10 of the handling path 6. Such extraction means 45 may comprise a conveyor 46, which for example comprises a conveyer belt or a chute as well as guiding walls, shaped so as to retain the orientation of the previously oriented objects 2 during the removal thereof from the orienting device 1.

The invention may advantageously be implemented in different machines for processing objects with an industrial interest, such as for example plastic moulded parts, metal objects, vegetal products or food.

It is clear that a man skilled in the art may make several changes and adjustments to the orienting device 1 according to the present invention in order to meet specific and incidental needs, all falling within the scope of protection of the invention as defined in the following claims.

## Claims

1. Orienting device (1) for orienting objects (2), comprising:
- a support structure (3),
- a succession of orienting seats (4) wherein each single orienting seat (4) has an access opening (24) for receiving a single object (2) having a desired orientation,
- a support ring (5) extended along an outer circumference of a rotating plate (12) and connected to the support structure (3), said support ring (5) carrying the succession of orienting seats (4) and defining a handling path (6) of the objects (2),
- means for moving the succession of orienting seats (4) in a movement direction (8) along the handling path (5),
- means (26) arranged along the handling path (6) and configured so as to eject from the orienting seats (4) the objects (2) having an orientation other than the desired orientation,
- an escape-preventing surface (27) extended along a portion of the handling path (6) and arranged above the orienting seats (4) at such a height as to prevent the objects (2) received in the orienting seats (4) with the desired orientation from completely scaping upward from the orienting seats (4),
**characterized by** comprising a shimming surface (44) extended along a feeding portion (9) of the handling path (6) upstream of the start of the escape-preventing surface (27), said shimming surface (44) being arranged above the access opening (24) of the orienting seats (4) so as to prevent the stacking of multiple objects (2) on a single orienting seat (4).

2. Device (1) according to claim 1, wherein the single orienting seats (8) are delimited by a seat bottom (13) whereon the object (2) rests due to the gravitational force, as well as by side surfaces (14, 15, 16).

3. Device (1) according to clam 2, comprising a side wall (17) connected to the support structure (2) and extended circumferentially along the handling path (6) so as to delimit the orienting seats on a radially outer side and form, along with the rotating plate (12) a collecting space (40) for collecting the loose objects (2) to be oriented.

4. Device (1) according to claim 3, comprising an escape-preventing wall (30) connected to the circumferential side wall (17) and wherein said escape-preventing surface (27) is formed on a bottom side of said escape-preventing wall (30) and faces the access opening (24) of the orienting seats (4).

5. Device (1) according to any one of the previous claims, wherein the escape-preventing surface (27) extends between the end of a feeding portion (9) and an object removal point (10) of the handling path (6).

6. Device (1) according to claim 5, wherein the escape-preventing surface (27) extends from the end of the feeding portion (9) to the object removal point (10) of the handling path (6).

7. Device (1) according to claim 6, wherein the feeding portion (9) extends in a range between about -45° and about + 90 ° and the object removal point (10) is formed at about + 220 ° as seen in the movement direction (8) relative to an initial point of 0° in the feeding portion (9).

8. Device (1) according to any one of the previous claims, wherein the vertical distance (31) of the escape-preventing surface (27) from the bottom (13) of the orienting seats (4) decreases in the movement direction (8), so that the escape-preventing surface (27) approaches a surface (34) facing upwards of the properly oriented objects (2), as the scats (4) approach an object. removal point (10) of the handling path (6).

9. Device (1) according to claim 8, wherein the escape-preventing surface (27) comprises:
- a first portion (35) extending from the initial end (32) in the movement direction (8) and having a substantially constant distance (31) from the bottom of the orienting seats (4),
- a second portion (36) extending between the first portion (35) and the object removal point (10) and having a gradually decreasing distance (31) from the bottom of the orienting seats (4) in the movement direction (8).

10. Device (1) according to claim 4, wherein said escape-preventing wall (27) comprises a plurality of separately manufactured portions and individually connectable to the support structure (3).

11. Device (1) according to any one of the previous claims, comprising an auxiliary orienting surface (41) extended along at least one portion of the handling path, said auxiliary orienting surface (41) being transverse relative to the escape-preventing surface (27) and configured for contacting a projection (39) of the properly oriented object (2) and orienting the object in a desired manner relative to a further orientation axis (40) during the advance of the seat (4) in the movement direction (8).

12. Device (1) according to the previous claim, wherein in an initial point (42) of the auxiliary orienting surface (41) there may be formed a seating track suitable for engaging such projections (39) irrespective of their instant position and guiding them towards the desired position thereof.

13. Device (1) according to any one of the preceding claims, wherein the distance (31) of the- shimming surface (47) from the bottom (13) of the orienting seats (4) increases in the movement direction (8).

14. Device (1) according to any one of the preceding claims, wherein in a transition point between the shimming surface (44) and the escape-preventing surface (27), they have the same distance (31) from the bottom of the seats (4).

15. Device (1) according to any preceding claim, in which said a support ring (5) is connected to said rotating plate (12).

## Patentansprüche

1. Ausrichtungsvorrichtung (1) zum Ausrichten von Objekten (2), umfassend:
- eine Trägerstruktur (3),
- eine Abfolge von Ausrichtungssitzen (4), wobei jeder einzelne Ausrichtungssitz (4) eine Zugangsöffnung (24) zum Aufnehmen eines einzelnen Objektes (2) aufweist, welches eine gewünschte Ausrichtung aufweist,
- einen Trägerring (5), welcher sich entlang eines Außenumfangs einer Drehplatte (12) erstreckt und mit der Trägerstruktur (3) verbunden ist, wobei der Trägerring (5) die Abfolge von Ausrichtungssitzen (4) trägt und einen Manipulierungspfad (6) der Objekte (2) definiert,
- Mittel zum Bewegen der Abfolge von Ausrichtungssitzen (4) in eine Bewegungsrichtung (8) entlang des Manipulierungspfades (6),
- Mittel (26), die entlang des Manipulierungspfades (6) angeordnet und derart konfiguriert sind, dass die Objekte (2), die eine andere Ausrichtung als die gewünschte Ausrichtung aufweisen, aus den Ausrichtungssitzen (4) ausgeworfen werden,
- eine Austtritt-Verhinderungsfläche (27), die sich entlang eines Abschnitts des Manipulierungspfades (6) erstreckt und oberhalb der Ausrichtungssitze (4) in einer solchen Höhe angeordnet ist, um zu verhindern, dass die in den Ausrichtungssitzen (4) mit der gewünschten Ausrichtung aufgenommenen Objekte (2) nach oben aus den Ausrichtungssitzen (4) vollständig austreten,
**dadurch gekennzeichnet, dass** die Vorrichtung eine Abstreif-Fläche (44) aufweist, die sich entlang eines Zufuhrabschnitts (9) des Manipulierungspfades (6) stromaufwärts des Beginns der Austtritt-Verhinderungsfläche (27) erstreckt, wobei die Abstreif-Fläche (44) oberhalb der Zugangsöffnung (24) der Ausrichtungssitze (4) angeordnet ist, um zu verhindern, dass mehrere Objekte (2) auf einem einzelnen Ausrichtungssitz (4) gestapelt werden.

2. Vorrichtung (1) nach Anspruch 1,
wobei die einzelnen Ausrichtungssitze (8) sowohl durch einen Sitzboden (13), auf welchem die Objekte (2) aufgrund der Schwerkraft liegen, als auch durch Seitenflächen (14, 15, 16) begrenzt sind.

3. Vorrichtung (1) nach Anspruch 2,
umfassend eine Seitenwand (17), die mit der Trägerstruktur (2) verbunden ist und sich im Umfangsrichtung entlang des Manipulierungspfades (6) erstreckt, um die Ausrichtungssitze an einer radialen Außenseite abzugrenzen und zusammen mit der Drehplatte (12) einen Sammelraum (40) zu bilden, zum Sammeln der auszurichtenden losen Objekte (2).

4. Vorrichtung (1) nach Anspruch 3,
umfassend eine Austritt-Verhinderungswand (30), die mit der Umfangsseitenwand (17) verbunden ist und wobei die Austritt-Verhinderungsfläche (27) an einer Bodenseite der Austritt-Verhinderungswand (30) gebildet ist und zu der Zugangsöffnung (24) der Ausrichtungssitze (4) weist.

5. Vorrichtung (1) nach einem der vorhergehenden Ansprüche,
wobei die Austritt-Verhinderungsfläche (27) sich zwischen dem Ende eines Zufuhrabschnittes (9) und einem Objektentfernungspunkt (10) des Manipulierungspfades (6) erstreckt.

6. Vorrichtung (1) nach Anspruch 5,
wobei die Austritt-Verhinderungsfläche (27) sich von dem Ende des Zufuhrabschnittes (9) zu dem Objektentfernungspunkt (10) des Manipulierungspfades (6) erstreckt.

7. Vorrichtung (1) nach Anspruch 6,
wobei der Zufuhrabschnitt (9) sich in einem Bereich zwischen ungefähr -45° und ungefähr +90° erstreckt und wobei der Objektentfernungspunkt (10) bei ungefähr +220° bei Betrachtung in die Bewegungsrichtung (8) relativ zu einem Anfangspunkt von 0° in dem Zufuhrabschnitt (9) gebildet ist.

8. Vorrichtung (1) nach einem der vorhergehenden Ansprüche, wobei der vertikale Abstand (31) der Austritt-Verhinderungsfläche (27) von dem Boden (13) der Ausrichtungssitze (4) in der Bewegungsrichtung (8) abnimmt, so dass die Austritt-Verhinderungsfläche (27) sich einer Fläche (34) nähert, die aufwärts der richtig ausgerichteten Objekte (2) weist, wenn die Sitze (4) sich einem Objektentfernungspunkt (10) des Manipulierungspfades (6) nähern.

9. Vorrichtung (1) nach Anspruch 8,
wobei die Austritt-Verhinderungsfläche (27) umfasst:
- einen ersten Abschnitt (35), der sich von dem Anfangsende (32) in die Bewegungsrichtung (8) erstreckt und einen in Wesentlichen konstanten Abstand (31) von dem Boden der Ausrichtungssitze (4) aufweist,
- einen zweiten Abschnitt (36), der sich zwischen dem ersten Abschnitt (35) und dem Objektentfernungspunkt (10) erstreckt und einen graduell abnehmenden Abstand (31) von dem Boden der Ausrichtungssitze (4) in der Bewegungsrichtung (8) aufweist.

10. Vorrichtung (1) nach Anspruch 4,
wobei die Austritt-Verhinderungswand (27) eine Mehrzahl von getrennt hergestellten und einzeln mit der Trägerstruktur (3) verbindbaren Abschnitten umfasst.

11. Vorrichtung (1) nach einem der vorhergehenden Ansprüche, umfassend eine Hilfsausrichtungsfläche (41), die sich entlang von wenigstens einem Abschnitt des Manipulierungspfades erstreckt, wobei die Hilfsausrichtungsfläche (41) relativ zu der Austritt-Verhinderungsfläche (27) quer liegt und konfiguriert ist, mit einem Vorsprung (39) des richtig ausgerichteten Objekts (2) in Kontakt zu stehen und um das Objekt auf eine gewünschte Weise relativ zu einer weiteren Ausrichtungsachse (40) während des Fortschreitens des Sitzes (4) in die Bewegungsrichtung (8) auszurichten.

12. Vorrichtung (1) nach dem vorhergehenden Anspruch,
wobei in einem Anfangspunkt (42) der Hilfsausrichtungsfläche (41) eine Sitzbahn gebildet sein kann, die dazu geeignet ist, mit derartigen Vorsprüngen (39) unabhängig von deren momentanen Position in Eingriff zu treten und diese in Richtung der gewünschten Position derselben zu führen.

13. Vorrichtung (1) nach einem der vorhergehenden Ansprüche,
wobei der Abstand (31) der Abstreif-Fläche (44) von dem Boden (13) der Ausrichtungssitze (4) in die Bewegungsrichtung (8) zunimmt.

14. Vorrichtung (1) nach einem der vorhergehenden Ansprüche,
wobei in einem Übergangspunkt zwischen der Abstreif-Fläche (44) und der Austritt-Verhinderungsfläche (27), sie den gleichen Abstand (31) von dem Boden der Sitze (4) aufweisen.

15. Vorrichtung (1) nach einem der vorhergehenden Ansprüche,
wobei der eine Trägerring (5) mit der Drehplatte (12) verbunden ist.

## Revendications

1. Dispositif d'orientation (1) pour orienter des objets (2), comprenant :
une structure de support (3),
une succession de sièges d'orientation (4) dans lequel chaque seul siège d'orientation (4) a une ouverture d'accès (24) pour recevoir un seul objet (2) ayant une orientation souhaitée,
un anneau de support (5) s'étendant le long d'une circonférence extérieure d'une plaque tournante (12) et relié à la structure de support (3), ledit anneau de support (5) supportant la succession de sièges d'orientation (4) et définissant un chemin de traitement (6) des objets (2),
des moyens pour déplacer la succession de sièges d'orientation (4) dans une direction de déplacement (8) le long du chemin de traitement (6),
des moyens (26) agencés le long du chemin de traitement (6) et configurés pour éjecter des sièges d'orientation (4) les objets (2) ayant une orientation autre que l'orientation souhaitée,
une surface de retenue (27) s'étendant le long d'une partie du chemin de traitement (6) et agencée au-dessus des sièges d'orientation (4) à une hauteur telle qu'elle empêche les objets (2) reçus dans les sièges d'orientation (4) avec l'orientation voulue de s'échapper complètement vers le haut des sièges d'orientation (4),
**caractérisé en ce qu'**il comprend une surface de calage (44) s'étendant le long d'une partie d'alimentation (9) du chemin de traitement (6) en amont du début de la surface de retenue (27), ladite surface de calage (44) étant agencée au-dessus de l'ouverture d'accès (24) des sièges d'orientation (4) de façon à empêcher l'empilement de multiples objets (2) sur un seul siège d'orientation (4).

2. Dispositif (1) selon la revendication 1, dans lequel les seuls sièges d'orientation (8) sont délimités par un fond de siège (13) sur lequel l'objet (2) repose du fait de la force gravitationnelle, ainsi que par des surfaces latérales (14, 15, 16).

3. Dispositif (1) selon la revendication 2, comprenant une paroi latérale (17) reliée à la structure de support (2) et s'étendant circonférentiellement le long du chemin de traitement (6) de façon à délimiter les sièges d'orientation sur un côté radialement extérieur et à former, le long de la plaque tournante (12) un espace de collecte (40) pour collecter les objets défaits à orienter.

4. Dispositif (1) selon la revendication 3, comprenant une paroi de retenue (30) reliée à la paroi latérale (17) circonférentielle et dans lequel ladite surface de retenue (27) est formée sur un côté inférieur de ladite paroi de retenue (30) et fait face à l'ouverture d'accès (24) des sièges d'orientation (4).

5. Dispositif (1) selon l'une quelconque des revendications précédentes, dans lequel la surface de retenue (27) s'étend entre l'extrémité d'une partie d'alimentation (9) et un point d'enlèvement d'objet (10) du chemin de traitement (6).

6. Dispositif (1) selon la revendication 5, dans lequel la surface de retenue (27) s'étend depuis l'extrémité de la partie d'alimentation (9) jusqu'au point d'enlèvement d'objet (10) du chemin de traitement (6).

7. Dispositif (1) selon la revendication 6, dans lequel la partie d'alimentation (9) s'étend sur une plage entre environ -45° et environ + 90° et le point d'enlèvement d'objet (10) est formé à environ + 220° comme vu dans la direction de déplacement (8) relativement à un point initial de 0° dans la partie d'alimentation (9).

8. Dispositif (1) selon l'une quelconque des revendications précédentes, dans lequel la distance verticale (31) de la surface de retenue (27) au fond (13) des sièges d'orientation (4) diminue dans la direction de déplacement (8), de telle manière que la surface de retenue (27) approche d'une surface (34) dirigée vers le haut des objets (2) orientés correctement, quand les sièges (4) approchent d'un point d'enlèvement d'objet (10) du chemin de traitement (6).

9. Dispositif (1) selon la revendication 8, dans lequel la surface de retenue (27) comprend :
une première partie (35) s'étendant depuis l'extrémité initiale (32) dans la direction de déplacement (8) et ayant une distance (31) au fond des sièges d'orientation (4) sensiblement constante,
une seconde partie (36) s'étendant entre la première partie (35) et le point d'enlèvement d'objet (10) et ayant une distance (31) au fond des sièges d'orientation (4) diminuant progressivement dans la direction de déplacement (8).

10. Dispositif (1) selon la revendication 4, dans lequel ladite paroi de retenue (27) comprend une pluralité de parties fabriquées séparément et pouvant être connectées individuellement à la structure de support (3).

11. Dispositif (1) selon l'une quelconque des revendications précédentes, comprenant une surface d'orientation auxiliaire (41) s'étendant le long d'au moins une partie du chemin de traitement, ladite surface d'orientation auxiliaire (41) étant transversale relativement à la surface de retenue (27) et configurée pour entrer en contact avec une saillie (39) de l'objet (2) correctement orienté et orienter l'objet d'une manière souhaitée relativement à un autre axe d'orientation (40) pendant l'avance du siège (4) dans la direction de déplacement (8).

12. Dispositif (1) selon la revendication précédente, dans lequel dans un point initial (42) de la surface d'orientation auxiliaire (41) il peut être formé un rail de siège convenant pour venir en prise avec de telles saillies (39) quelles que soient leur position instantanée et pour les guider vers la position souhaitée pour elles.

13. Dispositif (1) selon l'une quelconque des revendications précédentes, dans lequel la distance (31) de la surface de calage (44) au fond (13) des sièges d'orientation (4) augmente dans la direction de déplacement (8).

14. Dispositif (1) selon l'une quelconque des revendications précédentes, dans lequel dans un point de transition entre la surface de calage (44) et la surface de retenue (27), elles ont la même distance (31) au fond des sièges (4).

15. Dispositif (1) selon l'une quelconque des revendications précédentes, dans lequel ledit un anneau de support (5) est connecté à ladite plaque tournante (12).
